# EUROPÄISCHE PATENTSCHRIFT

(11) **EP 4 656 909 B1**
(45) Veröffentlichungstag und Bekanntmachung des Hinweises auf die Patenterteilung: **23.09.2026**
(21) Anmeldenummer: 25176617.6
(22) Anmeldetag: 15.05.2025
(51) Int. Cl.: F16H 57/04, F16C 33/66, F16H 25/20, F16H 25/22, F16N 1/00

(54) **SCHMIEREINHEIT FÜR EIN FÜGEMODUL UND VERFAHREN ZUM SCHMIEREN EINES FÜGEMODULS MIT EINER SOLCHEN SCHMIEREINHEIT**
LUBRICATING UNIT FOR A JOINING MODULE AND METHOD FOR LUBRICATING A JOINING MODULE HAVING SUCH A LUBRICATING UNIT
UNITÉ DE LUBRIFICATION POUR UN MODULE D'ASSEMBLAGE ET PROCÉDÉ DE LUBRIFICATION D'UN MODULE D'ASSEMBLAGE AVEC UNE TELLE UNITÉ DE LUBRIFICATION

(30) Priorität: 27.05.2024 EP 24178188
(43) Veröffentlichungstag der Anmeldung: 03.12.2025
(73) Patentinhaber: Kistler Holding AG, 8408 Winterthur (CH)
(72) Erfinder: Liu, Chang, 73072 Donzdorf (DE)

(56) Entgegenhaltungen:
- DE-A1- 102010 045 069
- DE-A1- 102011 100 707
- DE-B4- 102010 044 793

## Beschreibung

### Technisches Gebiet

Die Erfindung betrifft eine Schmiereinheit für ein Fügemodul und ein Verfahren zum Schmieren eines Fügemoduls mit einer solchen Schmiereinheit nach den Oberbegriffen der unabhängigen Ansprüche.

### Stand der Technik

Fügemodule werden in der industriellen Fertigung für vielfältige Montage- und Fügeprozesse wie Prägen, Stanzen, Nieten, Clinchen, usw. eingesetzt. Mit einem Fügemodul wird ein bei einem Montage- und Fügeprozess benötigtes Werkzeug in ein Werkstück verfahren und eine für den Montage- und Fügeprozess benötigte Kraft aufgebracht. Es gibt Fügemodule als elektromechanische, pneumatische oder hydraulische Module.

Ein Fügemodul weist einen Antrieb, einen Gewindetrieb, einen Stössel und ein Gehäuse auf. Der Antrieb ist mit dem Gewindetrieb in Wirkverbindung und eine Drehbewegung des Antriebes wird vom Gewindetrieb in eine Linearbewegung gewandelt. Der Stössel ist am Gewindetrieb angebracht und wird mit der Linearbewegung verfahren. Der Stössel trägt das Werkzeug oder Werkstück. Über den Stössel wird die benötigte Kraft aufgebracht. Der Gewindetrieb und der Stössel sind im Gehäuse angeordnet.

Für eine industrielle Fertigung von hoher Präzision weist das Fügemodul eine Hublänge von mehreren 100 mm, eine grosse Verfahrgeschwindigkeit von 400 mm/s, eine hohe Hubzahl von über 10 Hübe/min und eine hohe Wiederholgenauigkeit von 0.01 mm auf. Das Fügemodul ist für eine lange Lebensdauer mit über 10⁶ Hüben ausgelegt.

Zur Sicherstellung der Funktionsfähigkeit des Fügemoduls, muss der bewegliche Gewindetrieb mit einem Schmiermittel wie Öl oder Fett geschmiert werden. Dazu wird das Schmiermittel mittels einer Schmiereinheit an einem Schmierpunkt des Gewindetriebes appliziert.

Die Schrift WO01/033133A1 zeigt eine solche Schmiereinheit. Das zu applizierende Schmiermittel befindet sich gekapselt in einer Kammer. Über eine an der Kammer angeordnete Kompressionsfeder wird Druck auf die Kapsel ausgeübt und das Schmiermittel aus der Kapsel in die Kammer gepresst. Die Kammer ist über eine axiale Bohrung mit einer Vielzahl von Auslässen verbunden. Das Schmiermittel fliesst in die axiale Bohrung. Ein Rückschlagventil verhindert ein Fliessen des Schmiermittels aus der axialen Bohrung zurück in die Kammer. In der axialen Bohrung wird ein Kolben bewegt. Je nach Richtung der Kolbenbewegung wird das Schmiermittel in die axiale Bohrung gesaugt und durch die Auslässe gepumpt. Weitere Rückschlagventile an den Auslässen verhindern ein Fliessen des Schmiermittels aus den Auslässen zurück in die axiale Bohrung. Über die Auslässe wird das Schmiermittel am Schmierpunkt appliziert.

Die aus der Schrift WO01/033133A1 bekannte Schmiereinheit ist durch die vielen benötigten Rückschlagventile teuer in Fertigung und nimmt viel Raum in Anspruch.
Die Schrift DE102010044793B4 offenbart einen elektromechanischen Linearantrieb mit einer Gewindespindel und einer Spindelmutter. Die Spindelmutter trägt eine Kolbenstange. Bei Drehung der Gewindespindel ist die Spindelmutter in einem Gehäuseinnenraum längsverschiebbar. In einem Endanschlag der Längsverschiebung der Spindelmutter ist ein Schmiernippel angeordnet. Bei Anlage der Spindelmutter am Endanschlag gelangt Schmierfett vom Schmiernippel in eine Schmierleitung der Spindelmutter.
Die Schrift DE102011100707A1 zeigt einen elektrisch betätigbaren Linearantrieb mit einer Antriebsspindel und einer Spindelmutter im Inneren eines Gehäuses. Im Inneren des Gehäuses sind ein Schmierkanalsystem und ein davon gesondertes Atmungskanalsystem ausgebildet. Das Schmierkanalsystem ermöglicht eine Schmierung eines zwischen der Spindelmutter und der Antriebsspindel ausgebildeten Gewindeeingriffsbereichs mit Schmierfett. Das Atmungskanalsystem ermöglicht einen Druckausgleich im Inneren des Gehäuses.
Die Schrift DE102010045069A1 betrifft eine Linearbewegungsvorrichtung mit einem in einem Gehäuse angeordneten Läufer. Im Gehäuse ist ein Gehäuseschmierkanal vorgesehen. Am Läufer ist ein Läuferschmierkanal vorgesehen, welcher zu einer Schmierstelle führt. Zwischen dem Gehäuseschmierkanal und dem Läuferschmierkanal sind Dichtflächen zur Bewerkstelligung eines Dichteingriffes angeordnet. Der Dichteingriff wird durch Verfahren des Läufers in Längsrichtung bewerkstelligt. Bei Dichteingriff besteht eine Schmiermittelübertragungsverbindung vom Gehäuseschmierkanal zur Schmierstelle.

Die vorliegende Erfindung stellt sich die Aufgaben, eine kostengünstige und platzsparende Schmiereinheit für ein Fügemodul sowie ein Verfahren zum Schmieren eines Fügemoduls mit einer solchen Schmiereinheit zu schaffen.

### Darstellung der Erfindung

Diese Aufgaben werden durch die Merkmale der unabhängigen Ansprüche gelöst.

Die Erfindung betrifft eine Schmiereinheit für ein Fügemodul gemäss Anspruch 1.

Die Erfindung betrifft auch Verfahren zum Schmieren eines Fügemoduls gemäss Anspruch 11.

Im Vergleich zur Schmiereinheit der Schrift WO01/033133A1 benötigt die erfindungsgemässe Schmiereinheit zum Schmieren des Fügemoduls keine Rückschlagventile und ist dadurch kostengünstig und platzsparend. Denn erst wenn die Mutter in die Schmierposition verfahren ist und die Mutter und die Schmiereinheit im direkten mechanischen Kontakt miteinander sind, beginnen der Schmiereinheitskanal und der Mutterkanal miteinander zu kommunizieren und Schmiermittel gelangt zum Schmierpunkt. Das heisst, solange die Mutter oder sobald die Mutter nicht mehr in die Schmierposition verfahren ist, erfolgt keine Kommunikation zwischen dem Schmiereinheitskanal und dem Mutterkanal und Schmiermittel kann dann auch nicht vom Mutterkanal in den Schmiereinheitskanal zurückfliessen.

Vorteilhafte Weiterbildungen der Erfindungen sind in den abhängigen Ansprüchen geschützt.

### Kurze Beschreibung der Zeichnungen

Im Folgenden wird die Erfindung an einem Ausführungsbeispiel unter Beizug der Figuren näher erklärt. Es zeigen
- Fig. 1: einen Schnitt durch einen Teil eines Fügemoduls 1 mit einer Schmiereinheit 50;
- Fig. 2: einen Schnitt durch einen Teil der Schmiereinheit 50 gemäss Fig. 1 im geschlossenen Zustand; und
- Fig. 3: einen Schnitt durch einen Teil einer Schmiereinheit 50 gemäss Fig. 1 im geöffneten Zustand.

Gleiche Bezugszeichen bezeichnen in den Figuren gleiche Gegenstände.

### Wege zur Ausführung der Erfindung

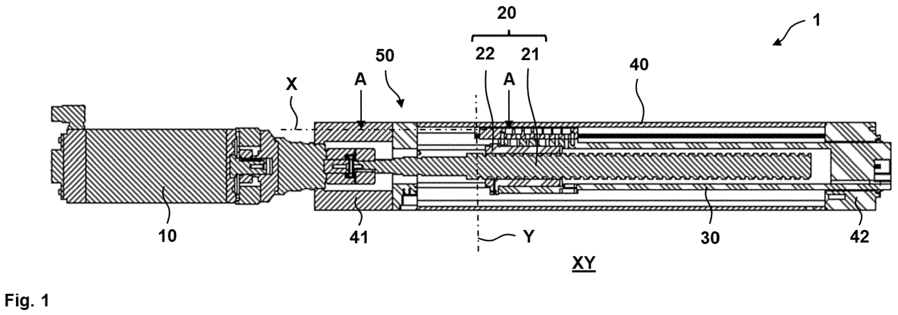

Fig. 1 zeigt einen Teil eines Ausführungsbeispiels eines Fügemoduls 1. Das Fügemodul 1 ist in einem Schnitt in einer durch eine Längsachse X und eine Querachse Y aufgespannten Ebene XY dargestellt. Die Längsachse X und die Querachse Y stehen senkrecht aufeinander.

Das Fügemodul 1 weist eine Antriebseinheit 10, einen Gewindetrieb 20, einen Stössel 30 und ein Gehäuse 40 auf.

Die Antriebseinheit 10 hat die Funktion, den Stössel 30 zu verfahren und über den Stössel 30 eine Kraft aufzubringen. Mit der Kraft erfolgt im Rahmen einer industriellen Fertigung ein Montage- und Fügeprozess wie Prägen, Stanzen, Nieten, Clinchen, usw. Dazu umfasst die Antriebseinheit 10 einen Motor, eine Bremse und eine Steuereinheit. Die Antriebseinheit 10 kann eine elektrische Antriebseinheit, eine pneumatische Antriebseinheit oder eine hydraulische Antriebseinheit sein. Ein Fügemodul 1 mit einem elektrischen Antriebseinheit 10 zeichnet sich durch hohe Energieeffizienz aus.

Die Antriebseinheit 10 ist mit dem Gewindetrieb 20 in Wirkverbindung. Der Gewindetrieb 20 hat die Funktion, eine Drehbewegung der Antriebseinheit 10 in eine Linearbewegung zu wandeln. Dazu weist der Gewindetrieb 20 eine Spindel 21 und eine Mutter 22 auf. Die Spindel 21 und die Mutter 22 sind aus einem mechanisch beständigen Werkstoff wie Stahl, Edelstahl, Gusseisen, usw. Die Spindel 21 und die Mutter 22 verfügen über zueinander passende Gewindegänge. Die Mutter 22 sitzt auf der Spindel 21. Die Spindel 21 ist drehfest mit der Antriebseinheit 10 verbunden. Die Verbindung der Spindel 21 mit der Antriebseinheit 10 erfolgt über geeignete Mittel wie Schrauben, Presspassung, usw. Die Drehbewegung der Antriebseinheit 10 bewirkt eine Linearbewegung der Mutter 22. Die Linearbewegung erfolgt entlang der Längsachse X. Eine Hublänge der Linearbewegung kann mehrere 100 mm betragen. Dabei kann eine Verfahrgeschwindigkeit von 400 mm/s erreicht werden. Die Linearbewegung kann eine hohe Hubzahl von über 10 Hübe/min und eine hohe Wiederholgenauigkeit von 0.01 mm aufweisen.

Der Stössel 30 hat die Funktion, ein beim Montage- und Fügeprozess benötigtes Werkzeug oder Werkstück zu tragen. Das Werkzeug oder Werkstück ist figürlich nicht dargestellt. Das Werkzeug oder Werkstück ist mit dem Stössel 30 verbunden. Die Verbindung des Werkzeugs oder Werkstücks mit dem Stössel 30 erfolgt über geeignete Mittel wie Schrauben, Einspannung, usw. Der Stössel 30 ist aus einem mechanisch beständigen Werkstoff wie Stahl, Edelstahl, Gusseisen, usw. Der Stössel 30 ist am Gewindetrieb 20 angebracht. Der Stössel 30 ist an einer von der Spindel 21 abgewandten Seite der Mutter 22 angeordnet. Der Stössel 30 ist mit der Mutter 22 verbunden. Die Verbindung des Stössels 30 mit der Mutter 22 erfolgt über geeignete Mittel wie Schrauben, Presspassung, Klebstoff, usw. Der Stössel 30 wird von der Mutter 22 in der Linearbewegung entlang der Längsachse X verfahren. Durch die Linearbewegung ist das vom Stössel 30 getragene Werkzeug oder Werkstück über eine definierte Hublänge verfahrbar und der Stössel 30 bringt die für den Montage- und Fügeprozess benötigte Kraft auf.

Das Gehäuse 40 hat die Funktion, den Gewindetrieb 20 und den Stössel 30 vor schädlichen Umwelteinflüssen wie Verunreinigungen (Staub, Feuchtigkeit, usw.) zu schützen. Solche Verunreinigungen können die Funktionsfähigkeit des Fügemoduls 1 beeinträchtigen. Das Gehäuse 40 weist einen Gehäusekörper aus einem mechanisch beständigen Werkstoff wie Aluminium, Stahl, Edelstahl, usw. auf. Vorteilhafterweise ist der Gehäusekörper ein Strangpressprofil aus Aluminium, Aluminiumlegierungen usw. Das Gehäuse 40 ist hohlzylinderförmig und weist einen Hohlraum auf. Der Gewindetrieb 20 und der Stössel 30 befinden sich im Hohlraum. Das Gehäuse 40 umschliesst den Gewindetrieb 20 und den Stössel 30 radial. Bezüglich der Längsachse X weist das Gehäuse 40 ein erstes Gehäuseende 41 mit einer ersten Öffnung und ein zweites Gehäuseende 42 mit einer zweiten Öffnung auf. Das erste Gehäuseende 41 ist der Antriebseinheit 10 zugewandt und die Antriebseinheit 10 ragt durch die erste Öffnung in das Gehäuse 40. Das zweite Gehäuseende 42 ist von der Antriebseinheit 10 abgewandt und der Stössel 30 ragt durch die zweite Öffnung aus dem Gehäuse 40. Die erste Öffnung und die zweite Öffnung sind über geeignete Mittel wie Dichtringe, usw. gegen ein Eindringen von Verunreinigungen in den Hohlraum abgedichtet.

Das Fügemodul 1 weist eine Schmiereinheit 50 auf. Die Schmiereinheit 50 ist eine eigenständige Baugruppe. Sie hat die Funktion, den bewegliche Gewindetrieb 20 mit einem Schmiermittel 56 wie Öl oder Fett zu schmieren. Durch die Schmierung wird die Funktionsfähigkeit des Fügemoduls 1 sichergestellt. Denn das Fügemodul 1 ist ein langlebiges Investitionsgut und für eine lange Lebensdauer mit über 10⁶ Hüben ausgelegt. Über die Lebensdauer erfolgt die Schmierung in regelmässigen zeitlichen Abständen. Bei der Schmierung wird das Schmiermittel 56 an mindestens einem Schmierpunkt zwischen Spindel 21 und Mutter 22 appliziert.

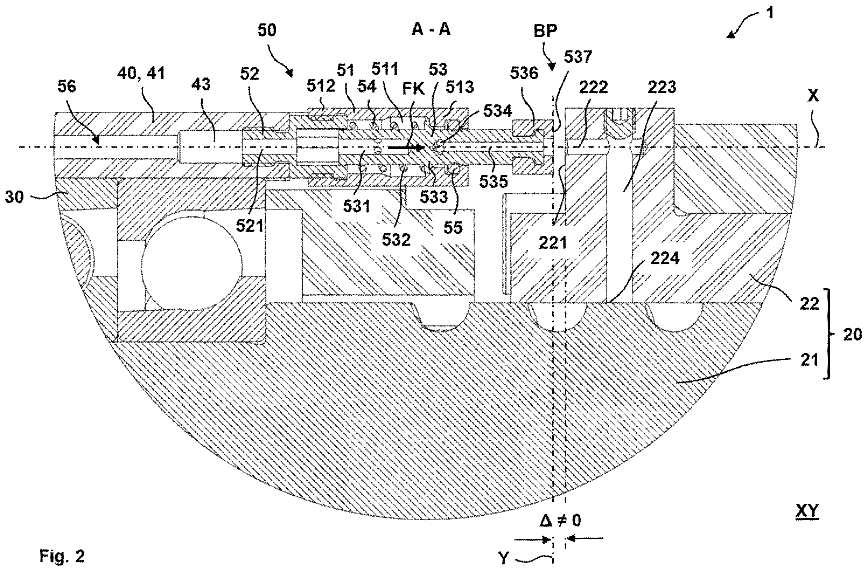

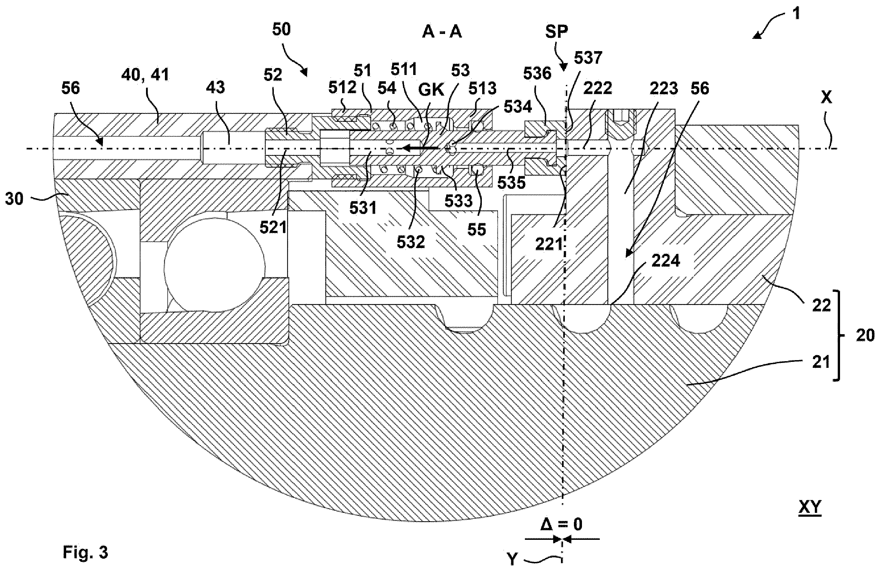

Die Schmiereinheit 50 ist am ersten Gehäuseende 41 des Fügemoduls 1 angeordnet. Die Fig. 2 und 3 zeigen Details zum Ausführungsbeispiel eines Teils der Schmiereinheit 50 gemäss Fig. 1. In den Fig. 2 und 3 ist die Schmiereinheit 50 in einem Schnittverlauf A - A dargestellt. Der Schnittverlauf A - A verläuft entlang zur Längsachse X.

Die Schmiereinheit 50 weist eine Hülse 51, einen Adapter 52, ein Leitungselement 53 und ein Federelement 54 auf. Die Hülse 51, der Adapter 52, das Leitungselement 53 und das Federelement 54 sind aus einem mechanisch beständigen Werkstoff wie Aluminium, Stahl, Edelstahl, usw.

Die Hülse 51 ist hohlzylinderförmig und weist einen Innenraum 511 auf. Bezüglich der Längsachse X weist die Hülse 51 ein erstes Hülsenende 512 und ein zweites Hülsenende 513 auf. Das erste Hülsenende 512 ist dem ersten Gehäuseende 41 zugewandt. Das zweite Hülsenende 513 ist der Mutter 22 zugewandt. Das erste Hülsenende 512 weist eine Öffnung auf und das zweite Hülsenende 513 weist eine Öffnung auf. Durch die Öffnungen der Hülsenenden 512, 513 ist der Innenraum 511 von ausserhalb der Hülse 51 zugänglich.

Der Adapter 52 ist am ersten Hülsenende 512 befestigt. Die Befestigung des Adapters 52 am ersten Hülsenende 512 erfolgt über geeignete Mittel wie Stoffschluss, Formschluss, Kraftschluss und Kombinationen davon. Im Ausführungsbeispiel der Fig. 2 und 3 erfolgt die Befestigung des Adapters 52 am ersten Hülsenende 512 mittels Verschraubung.

Über den Adapter 52 ist die Schmiereinheit 50 mit dem ersten Gehäuseende 41 verbindbar. Die Verbindung des Adapters 52 mit dem ersten Gehäuseende 41 erfolgt über geeignete Mittel wie Stoffschluss, Formschluss, Kraftschluss und Kombinationen davon. Im Ausführungsbeispiel der Fig. 2 und 3 ist der Adapter 52 über eine Verschraubung mit dem ersten Gehäuseende 41 verbunden.

Der Adapter 52 ist hohlzylinderförmig und weist einen Schmiereinheitskanal 521 mit einer ersten Öffnung und einer zweiten Öffnung auf. Der Schmiereinheitskanal 521 im Adapter 52 wird auch als Adapterkanal 521 bezeichnet. Im mit dem ersten Gehäuseende 41 verbundenen Zustand ist die erste Öffnung des Adapterkanals 521 vom ersten Hülsenende 512 abgewandt. Im mit dem ersten Gehäuseende 41 verbundenen Zustand bildet die erste Öffnung des Adapterkanals 521 eine entlang der Längsachse X dem ersten Gehäuseende 41 zugewandte äussere Begrenzung der Schmiereinheit 50.

Das erste Gehäuseende 41 weist einen Gehäusekanal 43 auf. Im Gehäusekanal 43 befindet sich das Schmiermittel 56.

Die Verbindung des Adapters 52 mit dem ersten Gehäuseende 41 ist so ausgebildet, dass im mit dem ersten Gehäuseende 41 verbundenen Zustand der Gehäusekanal 43 mit dem Adapterkanal 521 kommuniziert und Schmiermittel 56 vom Gehäusekanal 43 in den Adapterkanal 521 gelangt.

Die Verbindung des Adapters 52 mit dem ersten Gehäuseende 41 ist schmiermitteldicht. Im Sinne der vorliegenden Erfindung sind eine Verbindung oder ein direkter mechanischer Kontakt von einem ersten Bauteil mit einem zweiten Bauteil schmiermitteldicht, wenn über die Verbindung oder den direkten mechanischen Kontakt kein Schmiermittel 56 nach ausserhalb der beiden Bauteile gelangt.

Das Leitungselement 53 und das Federelement 54 sind im Innenraum 511 angeordnet.

Das Leitungselement 53 ist zylinderförmig und weist ein dem Adapter 52 zugewandtes erstes Ende und ein der Mutter 22 zugewandtes zweites Ende auf. Das Leitungselement 53 erstreckt sich entlang der Längsachse X. Mit seinem ersten Ende befindet sich das Leitungselement 53 im Innenraum 511, mit seinem zweiten Ende befindet sich das Leitungselement 53 ausserhalb des Innenraums 511. Das Leitungselement 53 reicht durch die Öffnung des zweiten Hülsenendes 513 aus dem Innenraum 511 heraus. Im Bereich der Öffnung des zweiten Hülsenendes 513 ist eine radiale Aussenseite des Leitungselementes 53 bezüglich der Längsachse X von einer radialen Innenseite des zweiten Hülsenendes 513 durch einen Spalt beabstandet.

Die Schmiereinheit 50 weist ein Dichtungselement 55 auf. Das Dichtungselement 55 ist am zweiten Hülsenende 513 angeordnet und hat die Funktion, den Spalt zwischen der radialen Aussenseite des Leitungselementes 53 und der Öffnung des zweiten Hülsenelementes 513 schmiermitteldicht abzudichten. Das Dichtungselement 55 ist ringförmig und besteht aus einem elastisch dichtenden Material wie Fluorelastomer, Perfluorelastomer, Acrylnitril-Butadien-Kautschuk, usw.

Das zweite Hülsenende 513 weist eine ringförmige Nut auf. Die Nut umschliesst die Öffnung des zweiten Hülsenelementes 513 radial vollständig. Die Nut ist so ausgebildet, dass sie das Dichtungselement 55 bereichsweise aufnimmt und dass ein Bereich des Dichtungselementes 55 aus der Nut radial in den Spalt ragt und im direkten mechanischen Kontakt mit dem Leitungselement 53 steht. Das Dichtungselement 55 dichtet den Spalt schmiermitteldicht durch Dichtpressung. Die Dichtpressung kann als axiale Dichtpressung entlang der Längsachse X, oder als radiale Dichtpressung entlang der Querachse Y, oder als eine Kombination aus axialer Dichtpressung entlang der Längsachse X und radialer Dichtpressung entlang der Querachse Y erfolgen.

Das Leitungselement 53 weist mindestens einen Schmiermittelkanal 531, 532, 534, 535 auf. Vorzugsweise weist das Leitungselement 53 mehrere Schmiermittelkanäle 531, 532, 534, 535 auf. Die Schmiermittelkanäle 531, 532, 534, 535 werden auch als erster Längskanal 531, zweiter Längskanal 535, erster Radialkanal 532 und zweiter Radialkanal 534 bezeichnet. Vorzugsweise weist das Leitungselement 53 mindestens einen ersten Radialkanal 532 und mindestens einen zweiten Radialkanal 534 auf.

Den ersten Längskanal 531 und den ersten Radialkanal 532 weist das Leitungselement 53 im Bereich seines ersten Endes auf. Der erste Längskanal 531 verläuft im Inneren des Leitungselementes 53 entlang der Längsachse X und weist eine Öffnung auf. Die Öffnung des ersten Längskanals 531 ist dem Adapterelement 52 zugewandt. Der erste Längskanal 531 kommuniziert mit dem Adapterkanal 521. Bezüglich der Längsachse X reicht der erste Radialkanal 532 vom ersten Längskanal 531 zur radialen Aussenseite des Leitungselementes 53 im Innenraum 511. Das Leitungselement 53 ist so ausgebildet, dass Schmiermittel 56 vom Adapterkanal 521 in den ersten Längskanal 531 gelangt und von dort durch den ersten Radialkanal 532 in den Innenraum 511 gelangt.

Den zweiten Radialkanal 534 und den zweiten Längskanal 535 weist das Leitungselement 53 im Bereich seines zweiten Endes auf. Im Zustand der Schmiereinheit 50 gemäss Fig. 3 kommunizieren der erste Radialkanal 532 und der zweite Radialkanal 534 im Innenraum 511 miteinander. Bezüglich der Längsachse X reicht der zweite Radialkanal 534 von der radialen Aussenseite des Leitungselementes 53 zum zweiten Längskanal 535. Der zweite Längskanal 535 verläuft im Inneren des Leitungselementes 53 entlang der Längsachse X und weist eine Öffnung auf. Die Öffnung des zweiten Längskanals 535 ist der Mutter 22 zugewandt.

Das Leitungselement 53 ist so ausgebildet, dass bei Kommunikation des ersten Radialkanals 532 mit dem zweiten Radialkanal 534, Schmiermittel 56 im Innenraum 511 vom ersten Radialkanal 532 in den zweiten Radialkanal 534 gelangt und von dort in den zweiten Längskanal 535 gelangt.

Das Leitungselement 53 weist eine Dichtfläche 533 auf. Die Dichtfläche 533 ist dem zweiten Hülsenende 513 zugewandt. Die Dichtfläche 533 ist auf der radialen Aussenseite des Leitungselementes 53 im Innenraum 511 angeordnet. Die Dichtfläche 533 ist als kegelförmiger Fortsatz ausgebildet.

Das Federelement 54 ist spiralförmig und liegt bezüglich der Längsachse X im Bereich des ersten Endes des Leitungselementes 53 radial aussenseitig an diesem an. Das Federelement 54 besitzt eine Federkraft FK. Das Federelement 54 ist so ausgebildet, dass es das Leitungselement 53 entlang der Längsachse X über die Dichtfläche 533 mit der Federkraft FK gegen die Hülse 51 mechanisch vorspannt. Die Dichtfläche 533 und das zweite Hülsenende 513 stehen dann im direkten mechanischen Kontakt miteinander. Die Dichtfläche 533 ist so ausgebildet, dass sie im direkten mechanischen Kontakt mit dem zweiten Hülsenende 513 und unter der Wirkung der Federkraft FK im Innenraum 511 die Kommunikation des ersten Radialkanals 532 mit dem zweiten Radialkanal 534 schmiermitteldicht unterbricht. Die Unterbrechung der Kommunikation des ersten Radialkanals 532 mit dem zweiten Radialkanal 534 ist im Zustand der Schmiereinheit 50 gemäss Fig. 2 zu sehen, wo kein Schmiermittel 56 vom ersten Radialkanal 532 in den zweiten Radialkanal 534 gelangt.

Das Leitungselement 53 weist einen Anschlag 536 auf. Der Anschlag 536 ist am der Mutter 22 zugewandten zweiten Ende des Leitungselementes 53 angeordnet. Im Ausführungsbeispiel der Fig. 2 und 3 ist der Anschlag 536 ein eigenes Bauteil und bezüglich der Längsachse X radial aussenseitig am Leitungselement 53 befestigt. Die Befestigung des Anschlags 536 am Leitungselement 53 erfolgt mittels Presspassung. Bei Kenntnis der vorliegenden Erfindung kann der Fachmann die Befestigung des Anschlags am Leitungselement auch mittels Verschraubung, Verklebung, usw. realisieren. Auch kann der Fachmann das Leitungselement und den Anschlag einstückig fertigen.

Der Anschlag 536 ist hohlzylinderförmig. Der zweite Längskanal 535 reicht entlang der Längsachse X durch den Anschlag 536. Der Anschlag 536 weist eine Anschlagdichtfläche 537 auf. Bezüglich der Längsachse X ist die Anschlagdichtfläche 537 der Mutter 22 zugewandt. Im mit dem ersten Gehäuseende 41 verbundenen Zustand bildet die Anschlagdichtfläche 537 eine entlang der Längsachse X der Mutter 22 zugewandte äussere Begrenzung der Schmiereinheit 50. Die Querachse Y verläuft in der Anschlagdichtfläche 537. Bezüglich der Längsachse X umgibt die Anschlagdichtfläche 537 die Öffnung des zweiten Längskanals 535 radial vollständig.

Die Mutter 22 ist mit der Linearbewegung entlang der Längsachse X in verschiedene Positionen verfahrbar. In einer Betriebsposition BP der Mutter 22 gemäss Fig. 2 befindet sich die Mutter 22 bezüglich der Längsachse X in einer Distanz Δ ≠ 0 (ungleich Null) zur Schmiereinheit 50. In der Betriebsposition BP findet der Betrieb des Fügemoduls 1 statt. Im Betrieb des Fügemoduls 1 nimmt die Mutter 22 sehr viele unterschiedliche Betriebspositionen mit einer Distanz Δ ≠ 0 zur Schmiereinheit 50 ein. In der Betriebsposition BP haben die Mutter 22 und die Schmiereinheit 50 aufgrund der Distanz Δ ≠ 0 keinen direkten mechanischen Kontakt miteinander. In einer Schmierposition SP der Mutter 22 gemäss Fig. 3 hingegen befindet sich die Mutter 22 bezüglich der Längsachse X in einer Distanz Δ = 0 (gleich Null) zur Schmiereinheit 50. In der Schmierposition SP findet kein Betrieb des Fügemoduls 1 statt. In der Schmierposition SP der Mutter 22 erfolgt die Schmierung des Gewindetriebes 20. In der Schmierposition SP befinden sich die Mutter 22 und die Schmiereinheit 50 aufgrund der Distanz Δ = 0 im direkten mechanischen Kontakt miteinander.

Die Mutter 22 weist einen entlang der Längsachse X verlaufenden Mutterlängskanal 222 auf. Der Mutterlängskanal 222 weist eine Öffnung auf. Die Öffnung des Mutterlängskanals 222 ist der Schmiereinheit 50 zugewandt. Die Mutter 22 weist eine Mutterdichtfläche 221 auf. Die Mutterdichtfläche 221 ist der Schmiereinheit 50 zugewandt. Bezüglich der Längsachse X umgibt die Mutterdichtfläche 221 die Öffnung des Mutterlängskanals 222 radial vollständig.

Der zweite Längskanal 535 und der Mutterlängskanal 222 sind so ausgebildet, dass sie beim direkten mechanischen Kontakt von Mutter 22 und Schmiereinheit 50 der Schmierposition SP gemäss Fig. 3 miteinander kommunizieren und Schmiermittel 56 vom zweiten Längskanal 535 durch die Öffnung des zweiten Längskanals 535 in die Öffnung des Mutterlängskanals 222 und in den Mutterlängskanal 222 gelangt.

Der direkte mechanische Kontakt von Mutter 22 und Schmiereinheit 50 erfolgt über die Anschlagdichtfläche 537 und die Mutterdichtfläche 221. Die Anschlagdichtfläche 537 und die Mutterdichtfläche 221 sind so ausgebildet, dass sie bei direktem mechanischen Kontakt von Mutter 22 und Schmiereinheit 50 die Kommunikation des zweiten Längskanals 535 mit dem Mutterlängskanal 222 schmiermitteldicht abdichten. Diese Abdichtung des mit dem Mutterlängskanal 222 kommunizierenden zweiten Längskanals 535 ist im Zustand der Schmiereinheit 50 gemäss Fig. 3 zu sehen, wo kein Schmiermittel 56 aus dem mit dem Mutterlängskanal 222 kommunizierenden zweiten Längskanal 535 nach ausserhalb gelangt.

Die Mutter 22 weist einen entlang der Querachse Y verlaufenden Mutterquerkanal 223 auf. Der Mutterlängskanal 222 und der Mutterquerkanal 223 kommunizieren miteinander. Der Mutterquerkanal 223 führt zu mindestens einem Schmierpunkt 224. Schmiermittel 56, das sich im Mutterlängskanal 222 befindet, gelangt vom Mutterlängskanal 222 in den Mutterquerkanal 223 und von dort zum Schmierpunkt 224.

Der Mutterlängskanal 222 und der Mutterquerkanal 223 werden auch als mindestens ein Mutterkanal 222, 223 bezeichnet.

Im direkten mechanischen Kontakt von Mutter 22 und Schmiereinheit 50 der Schmierposition SP gemäss Fig. 3 übt die Mutter 22 entlang der Längsachse X ein Gegenkraft GK auf das Leitungselement 53 aus. Die Gegenkraft GK der Mutter 22 wirkt gegen die Federkraft FK des Federelementes 54. Eine Gegenkraft GK, welche grösser als die Federkraft FK ist, verschiebt das Leitungselement 53 entlang der Längsachse X in Richtung des ersten Gehäuseendes 41 und löst die Dichtfläche 533 von der Hülse 51. Eine Gegenkraft GK, welche grösser als die Federkraft FK ist, hebt somit die Unterbrechung der Kommunikation des ersten Radialkanals 532 mit dem zweiten Radialkanal 534 im Innenraum 511 auf.

In der Betriebsposition BP gemäss Fig. 2 hingegen befinden sich die Mutter 22 und die Schmiereinheit 50 nicht im direkten mechanischen Kontakt miteinander und die Mutter 22 übt keine Gegenkraft GK auf das Leitungselement 53 aus. Solange die Mutter 22 nicht in die Schmierposition SP verfahren ist, kann die Gegenkraft GK nicht auf das Leitungselement 53 wirken. Ohne Gegenkraft GK wirkt dann einzig die Federkraft FK des Federelementes 54 auf das Leitungselement 53 und spannt die Dichtfläche 533 entlang der Längsachse X mechanisch gegen die Hülse 51 und unterbricht im Innenraum 511 die Kommunikation des ersten Radialkanals 532 mit dem zweiten Radialkanal 534.

### Bezugszeichenliste

- 1: Fügemodul
- 10: Antriebseinheit
- 20: Gewindetrieb
- 21: Spindel
- 22: Mutter
- 221: Mutterdichtfläche
- 222: Mutterlängskanal
- 223: Mutterquerkanal
- 224: Schmierpunkt
- 30: Stössel
- 40: Gehäuse
- 41: erstes Gehäuseende
- 42: zweites Gehäuseende
- 43: Gehäusekanal
- 50: Schmiereinheit
- 51: Hülse
- 511: Innenraum
- 512: erstes Hülsenende
- 513: zweite Hülsenende
- 52: Adapter
- 521: Adapterkanal
- 53: Leitungselement
- 531: erster Längskanal
- 532: erster Radialkanal
- 533: Dichtfläche
- 534: zweiter Radialkanal
- 535: zweiter Längskanal
- 536: Anschlag
- 537: Anschlagdichtfläche
- 54: Federelement
- 55: Dichtungselement
- 56: Schmiermittel
- A - A: Schnittverlauf
- BP: Betriebsposition
- Δ: Distanz
- FK: Federkraft
- GK: Gegenkraft
- SP: Schmierposition
- X: Längsachse
- XY: Ebene
- Y: Querachse

## Patentansprüche

1. Schmiereinheit (50) für ein Fügemodul (1), welches Fügemodul (1) einen Gewindetrieb (20), einen Stössel (30) und ein Gehäuse (40) aufweist, welcher Gewindetrieb (20) eine Mutter (22) aufweist, welcher Stössel (30) von der Mutter (22) mit einer Linearbewegung verfahrbar ist; welche Schmiereinheit (50) am Gehäuse (40) angeordnet ist und in mindestens einem Schmiereinheitskanal (521, 531, 532, 534, 535) Schmiermittel (56) aufweist; welche Mutter (22) mindestens einen Mutterkanal (222, 223) und mindestens einen Schmierpunkt (224) aufweist; wobei die Mutter (22) in eine Schmierposition (SP) verfahrbar ist, in welcher Schmierposition (SP) die Mutter (22) und die Schmiereinheit (50) im direkten mechanischen Kontakt miteinander sind und der Schmiereinheitskanal (521, 531, 532, 534, 535) und der Mutterkanal (222, 223) miteinander kommunizieren und Schmiermittel (56) vom Schmiereinheitskanal (521, 531, 532, 534, 535) in den Mutterkanal (222, 223) und von dort zum Schmierpunkt (224) gelangt; **dadurch gekennzeichnet, dass** die Schmiereinheit (50) eine Hülse (51), ein Leitungselement (53) und ein Federelement (54) aufweist; dass die Hülse (51) einen Innenraum (511) aufweist und ein erstes Ende des Leitungselementes (53) und das Federelement (54) im Innenraum (511) angeordnet sind; dass das erste Ende des Leitungselementes (53) mindestens eine Dichtfläche (533) aufweist; und dass solange die Mutter (22) nicht in die Schmierposition (SP) verfahren ist, das Federelement (54) so ausgebildet ist, dass es im Innenraum (511) die Dichtfläche (533) mit einer Federkraft (FK) gegen die Hülse (51) mechanisch vorspannt und eine Kommunikation im Schmiereinheitskanal (521, 531, 532, 534, 535) schmiermitteldicht unterbricht.

2. Schmiereinheit (50) nach Anspruch 1, **dadurch gekennzeichnet, dass** die in die Schmierposition (SP) verfahrene Mutter (22) eine Gegenkraft (GK) auf ein zweites Ende des Leitungselementes (53) ausübt, welche Gegenkraft (GK) gegen die Federkraft (FK) wirkt; und dass eine Gegenkraft (GK), welche grösser als die Federkraft (FK) ist, die Unterbrechung der Kommunikation im Schmiereinheitskanal (521, 531, 532, 534, 535) aufhebt.

3. Schmiereinheit (50) nach Anspruch 2, **dadurch gekennzeichnet, dass** die in die Schmierposition (SP) verfahrene Mutter (22) das Leitungselement (53) entlang einer Längsachse (X) verschiebt und die mechanische Vorspannung der Dichtfläche (533) gegen die Hülse (51) löst.

4. Schmiereinheit (50) nach einem der Ansprüche 1 bis 3, **dadurch gekennzeichnet, dass** die die Schmiereinheit (50) einen Anschlag (536) aufweist; dass der Schmiereinheitskanal (521, 531, 532, 534, 535) durch den Anschlag (536) reicht; dass der Anschlag (536) eine der Mutter (22) zugewandte Anschlagdichtfläche (537) aufweist; dass die Mutter (22) eine der der Schmiereinheit (50) zugewandte Mutterdichtfläche (221) aufweist; und dass die Anschlagdichtfläche (537) und die Mutterdichtfläche (221) so ausgebildet sind, dass sie bei direktem mechanischen Kontakt von Mutter (22) und Schmiereinheit (50) die Kommunikation des Schmiereinheitskanals (521, 531, 532, 534, 535) mit dem Mutterkanal (222, 223) schmiermitteldicht abdichten.

5. Schmiereinheit (50) nach einem der Ansprüche 1 bis 4, **dadurch gekennzeichnet, dass** das Gehäuse (40) ein erstes Gehäuseende (41) mit einem Gehäusekanal (43) aufweist, in welchem Gehäusekanal (43) sich Schmiermittel (56) befindet; dass die Schmiereinheit (50) eine Hülse (51) und einen Adapter (52) aufweist; dass die Hülse (51) ein dem ersten Gehäuseende (41) zugewandtes erstes Hülsenende (512) aufweist; dass der Adapter (52) am ersten Hülsenende (512) befestigt ist; und dass die Schmiereinheit (50) über den Adapter (52) mit dem ersten Gehäuseende (41) verbindbar ist.

6. Schmiereinheit (50) nach Anspruch 5, **dadurch gekennzeichnet, dass** der Adapter (52) einen Schmiereinheitskanal (521) aufweist; und dass im mit dem ersten Gehäuseende (41) verbundenen Zustand der Gehäusekanal (43) mit dem Adapterkanal (521) kommuniziert und Schmiermittel (56) vom Gehäusekanal (43) in den Schmiereinheitskanal (521) des Adapters (52) gelangt.

7. Schmiereinheit (50) nach Anspruch 6, **dadurch gekennzeichnet, dass** die Schmiereinheit (50) ein Leitungselement (53) aufweist; dass das Leitungselement (53) ein dem Adapter (52) zugewandtes erstes Ende aufweist; dass die Hülse (51) einen Innenraum (511) aufweist und das Leitungselement (53) mit seinem ersten Ende im Innenraum (511) angeordnet ist; dass das Leitungselement (53) im Bereich seines ersten Endes mindestens einen Schmiereinheitskanal (531, 532) aufweist; und dass der Schmiereinheitskanal (531, 532) des Leitungselement (53) mit dem Schmiereinheitskanal (521) des Adapters (52) kommuniziert und Schmiermittel (56) vom Schmiereinheitskanal (521) des Adapters (52) in den Schmiereinheitskanal (531, 532) des Leitungselementes (53) gelangt.

8. Schmiereinheit (50) nach Anspruch 7, **dadurch gekennzeichnet, dass** das Leitungselement (53) ein der Mutter (22) zugewandtes zweites Ende aufweist; dass das Leitungselement (53) mit seinem zweiten Ende ausserhalb des Innenraums (511) angeordnet ist; dass das Leitungselement (53) im Bereich seines zweiten Endes mindestens einen Schmiereinheitskanal (534, 535) aufweist; und dass bei Kommunikation des Schmiereinheitskanals (531, 532) im Bereich des ersten Endes des Leitungselementes (53) mit dem Schmiereinheitskanal (534, 535) im Bereich des zweiten Endes des Leitungselementes (53), Schmiermittel (56) vom Schmiereinheitskanal (531, 532) im Bereich des ersten Endes des Leitungselementes (53) in den Schmiereinheitskanal (534, 535) im Bereich des zweiten Endes des Leitungselementes (53) gelangt.

9. Schmiereinheit (50) nach Anspruch 8, **dadurch gekennzeichnet, dass** der Schmiereinheitskanal (531, 532) im Bereich des ersten Endes des Leitungselementes (53) in den Innenraum (511) reicht; dass der Schmiereinheitskanal (534, 535) im Bereich des zweiten Endes des Leitungselementes (53) in den Innenraum (511) reicht; und dass die Kommunikation des Schmiereinheitskanals (531, 532) im Bereich des ersten Endes des Leitungselementes (53) mit dem Schmiereinheitskanal (534, 535) im Bereich des zweiten Endes des Leitungselementes (53) im Innenraum (511) unterbrechbar ist.

10. Schmiereinheit (50) nach einem der Ansprüche 5 bis 9, **dadurch gekennzeichnet, dass** die Hülse (51) einen Innenraum (511) und ein der Mutter (22) zugewandtes zweites Hülsenende (513) aufweist; dass das zweite Hülsenende (513) eine Öffnung aufweist; dass die Schmiereinheit (50) ein Leitungselement (53) aufweist; dass das Leitungselement (53) ein erstes Ende aufweist und mit seinem ersten Ende im Innenraum (511) angeordnet ist; dass das Leitungselement (53) durch die Öffnung des zweiten Hülsenendes (513) aus dem Innenraum (511) heraus reicht; dass im Bereich der Öffnung des zweiten Hülsenendes (513) eine radiale Aussenseite des Leitungselementes (53) von einer radialen Innenseite des zweiten Hülsenendes (513) durch einen Spalt beabstandet ist; und dass die Schmiereinheit (50) ein Dichtungselement (55) aufweist, welches Dichtungselement (55) am zweiten Hülsenende (513) angeordnet ist und den Spalt schmiermitteldicht abdichtet.

11. Verfahren zum Schmieren eines Fügemoduls (1), welches Fügemodul (1) einen Gewindetrieb (20), einen Stössel (30) und ein Gehäuse (40) aufweist, welcher Gewindetrieb (20) eine Mutter (22) aufweist, welcher Stössel (30) von der Mutter (22) mit einer Linearbewegung verfahrbar ist; mit einer Schmiereinheit (50), welche Schmiereinheit (50) am Gehäuse (40) angeordnet ist und in mindestens einem Schmiereinheitskanal (521, 531, 532, 534, 535) Schmiermittel (56) aufweist; welche Mutter (22) mindestens einen Mutterkanal (222, 223) und mindestens einen Schmierpunkt (224) aufweist; wobei die Mutter (22) in eine Schmierposition (SP) verfahren wird, in welcher Schmierposition (SP) die Mutter (22) und die Schmiereinheit (50) im direkten mechanischen Kontakt miteinander sind und der Schmiereinheitskanal (521, 531, 532, 534, 535) und der Mutterkanal (222, 223) miteinander kommunizieren und Schmiermittel (56) vom Schmiereinheitskanal (521, 531, 532, 534, 535) in den Mutterkanal (222, 223) und von dort zum Schmierpunkt (224) gelangt; **dadurch gekennzeichnet, dass** die Schmiereinheit (50) eine Hülse (31), ein Leitungselement (53) und ein Federelement (54) aufweist, welche Hülse (51) einen Innenraum (511) aufweist und ein erstes Ende des Leitungselementes (53) und das Federelement (54) im Innenraum (511) angeordnet sind, welches erste Ende des Leitungselementes (53) mindestens eine Dichtfläche (533) aufweist und dass solange die Mutter (22) nicht in die Schmierposition (SP) verfahren ist, das Federelement (54) so ausgebildet ist, dass es im Innenraum (511) die Dichtfläche (533) mit einer Federkraft (FK) gegen die Hülse (51) mechanisch vorspannt und eine Kommunikation im Schmiereinheitskanal (521, 531, 532, 534, 535) schmiermitteldicht unterbricht.

12. Verfahren nach Anspruch 11, **dadurch gekennzeichnet, dass** die in die Schmierposition (SP) verfahrene Mutter (22) eine Gegenkraft (GK) auf ein zweites Ende des Leitungselementes (53) ausübt, welche Gegenkraft (GK) gegen die Federkraft (FK) wirkt; und dass eine Gegenkraft (GK), welche grösser als die Federkraft (FK) ist, die Unterbrechung der Kommunikation im Schmiereinheitskanal (521, 531, 532, 534, 535) aufhebt.

## Claims

1. Lubrication unit (50) for a joining module (1), which joining module (1) comprises a screw drive (20), a tappet (30) and a housing (40), which screw drive (20) comprises a nut (22), which tappet (30) can be moved by said nut (22) with a linear movement; which lubrication unit (50) is arranged on the housing (40) and comprises a lubricant (56) in at least one lubrication unit channel (521, 531, 532, 534, 535); which nut (22) comprises at least one nut channel (222, 223) and at least one lubrication point (224); whereby said nut (22) can be moved into a lubrication position (SP), in which lubrication position (SP) the nut (22) and the lubrication unit (50) are in direct mechanical contact with each other and the lubrication unit channel (521, 531, 532, 534, 535) and the nut channel (222, 223) communicate with one another and lubricant (56) passes from the lubrication unit channel (521, 531, 532, 534, 535) into the nut channel (222, 223) and from there to the lubrication point (224); **characterized in that** said lubrication unit (50) comprises a sleeve (51), a line element (53) and a spring element (54); **in that** said sleeve (51) comprises an interior (511) and a first end of the line element (53) and the spring element (54) are arranged in the interior (511); **in that** the first end of the line element (53) comprises at least one sealing surface (533); and **in that**, as long as said nut (22) is not moved into the lubrication position (SP), said spring element (54) is designed in such a way that it mechanically pretensions the sealing surface (533) with a spring force (FK) against the sleeve (51) in the interior (511) and interrupts communication in the lubrication unit channel (521, 531, 532, 534, 535) in a lubricant-tight manner.

2. Lubrication unit (50) according to claim 1, **characterized in that** said nut (22) moved into the lubrication position (SP) exerts a counterforce (GK) on a second end of the line element (53), which counterforce (GK) acts against the spring force (FK); and **in that** a counterforce (GK) which is greater than the spring force (FK) abolishes the interruption of the communication in the lubrication unit channel (521, 531, 532, 534, 535).

3. Lubrication unit (50) according to claim 2, **characterized in that** said nut (22) moved into the lubrication position (SP) displaces the line element (53) along a longitudinal axis (X) and releases the mechanical pretension of the sealing surface (533) against the sleeve (51).

4. Lubrication unit (50) according to any of the claims 1 to 3, **characterized in that** said lubrication unit (50) comprises a stop (536); **in that** the lubrication unit channel (521, 531, 532, 534, 535) extends through the stop (536); **in that** the stop (536) comprises a stop sealing surface (537) facing said nut (22); **in that** said nut (22) comprises a nut sealing surface (221) facing the lubrication unit (50); and **in that** the stop sealing surface (537) and the nut sealing surface (221) are designed in such a way that they seal the communication of the lubrication unit channel (521, 531, 532, 534, 535) with the nut channel (222, 223) in a lubricant-tight manner upon direct mechanical contact between the nut (22) and the lubrication unit (50).

5. Lubrication unit (50) according to any of the claims 1 to 4, **characterized in that** said housing (40) comprises a first housing end (41) with a housing channel (43), in which housing channel (43) lubricant (56) is located; **in that** said lubrication unit (50) comprises a sleeve (51) and an adapter (52); **in that** the sleeve (51) comprises a first sleeve end (512) facing the first housing end (41); **in that** said adapter (52) is fastened to the first sleeve end (512); and **in that** said lubrication unit (50) can be connected to the first housing end (41) via the adapter (52).

6. Lubrication unit (50) according to claim 5, **characterized in that** said adapter (52) comprises a lubrication unit channel (521); and **in that**, in the state connected to the first housing end (41), said housing channel (43) communicates with the adapter channel (521) and lubricant (56) passes from the housing channel (43) into the lubrication unit channel (521) of the adapter (52).

7. Lubrication unit (50) according to claim 6, **characterized in that** said lubrication unit (50) comprises a line element (53); **in that** said line element (53) comprises a first end facing the adapter (52); **in that** said sleeve (51) comprises an interior (511) and the line element (53) is arranged with its first end in the interior (511); **in that** said line element (53) comprises at least one lubrication unit channel (531, 532) in the region of its first end; and **in that** the lubrication unit channel (531, 532) of the line element (53) communicates with said lubrication unit channel (521) of the adapter (52) and lubricant (56) passes from the lubrication unit channel (521) of the adapter (52) into the lubrication unit channel (531, 532) of the line element (53).

8. Lubrication unit (50) according to claim 7, **characterized in that** said line element (53) comprises a second end facing the nut (22); **in that** said line element (53) is arranged with its second end outside the interior (511); **in that** said line element (53) comprises at least one lubrication unit channel (534, 535) in the region of its second end; and **in that** upon communication of the lubrication unit channel (531, 532) in the region of the first end of the line element (53) with the lubrication unit channel (534, 535) in the region of the second end of the line element (53), lubricant (56) passes from the lubrication unit channel (531, 532) in the region of the first end of the line element (53) into the lubrication unit channel (534, 535) in the region of the second end of the line element (53).

9. Lubrication unit (50) according to claim 8, **characterized in that** said lubrication unit channel (531, 532) extends into the interior (511) in the region of the first end of said line element (53); **in that** said lubrication unit channel (534, 535) extends into the interior (511) in the region of the second end of the line element (53); and **in that** the communication of the lubrication unit channel (531, 532) in the region of the first end of the line element (53) with the lubrication unit channel (534, 535) in the region of the second end of the line element (53) in the interior (511) can be interrupted.

10. Lubrication unit (50) according to any of the claims 5 to 9, **characterized in that** said sleeve (51) comprises an interior (511) and a second sleeve end (513) facing the nut (22); **in that** the second sleeve end (513) comprises an opening; **in that** the lubrication unit (50) comprises a line element (53); **in that** said line element (53) comprises a first end and is arranged with its first end in the interior (511); **in that** said line element (53) extends out of the interior (511) through the opening of the second sleeve end (513); **in that**, in the region of the opening of the second sleeve end (513), a radial outer side of said line element (53) is spaced apart from a radial inner side of the second sleeve end (513) by a gap; and **in that** said lubrication unit (50) comprises a sealing element (55), which sealing element (55) is arranged at the second sleeve end (513) and seals the gap in a lubricant-tight manner.

11. Method for lubricating a joining module (1), which joining module (1) comprises a screw drive (20), a tappet (30) and a housing (40), which screw drive (20) comprises a nut (22), which tappet (30) can be moved by said nut (22) with a linear movement; with a lubrication unit (50), which lubrication unit (50) is arranged on the housing (40) and comprises lubricant (56) in at least one lubrication unit channel (521, 531, 532, 534, 535); which nut (22) comprises at least one nut channel (222, 223) and at least one lubrication point (224); whereby said nut (22) is moved into a lubrication position (SP), in which lubrication position (SP) said nut (22) and the lubrication unit (50) are in direct mechanical contact with each other and the lubrication unit channel (521, 531, 532, 534, 535) and the nut channel (222, 223) communicate with each other and lubricant (56) passes from the lubrication unit channel (521, 531, 532, 534, 535) into the nut channel (222, 223) and from there to the lubrication point (224); **characterized in that** said lubrication unit (50) comprises a sleeve (31), a line element (53) and a spring element (54), which sleeve (51) comprises an interior (511) and a first end of the line element (53) and the spring element (54) are arranged in the interior (511), which first end of said line element (53) comprises at least one sealing surface (533), and **in that**, as long as the nut (22) is not moved into the lubrication position (SP), said spring element (54) is designed in such a manner that it mechanically pretensions the sealing surface (533) with a spring force (FK) against said sleeve (51) in the interior (511) and interrupts a communication in the lubrication unit channel (521, 531, 532, 534, 535) in a lubricant-tight manner.

12. Method according to claim 11, **characterized in that** said nut (22) moved into the lubrication position (SP) exerts a counterforce (GK) on a second end of the line element (53), which counterforce (GK) acts against the spring force (FK); and **in that** a counterforce (GK) which is greater than the spring force (FK) abolishes the interruption of the communication in the lubrication unit channel (521, 531, 532, 534, 535).

## Revendications

1. Unité de lubrification (50) pour un module d'assemblage (1), lequel module d'assemblage (1) comprend un entraînement à vis (20), un poussoir (30) et un boîtier (40), ledit entraînement à vis (20) comprenant un écrou (22), ledit poussoir (30) pouvant être déplacé par ledit écrou (22) selon un mouvement linéaire ; ladite unité de lubrification (50) étant disposée au niveau du boîtier (40) et contenant un lubrifiant (56) dans au moins un canal d'unité de lubrification (521, 531, 532, 534, 535) ; ledit écrou (22) comprenant au moins un canal d'écrou (222, 223) et au moins un point de lubrification (224) ; ledit écrou (22) pouvant être déplacé dans une position de lubrification (SP), position de lubrification dans laquelle l'écrou (22) et l'unité de lubrification (50) sont en contact mécanique direct l'un avec l'autre et le canal d'unité de lubrification (521, 531, 532, 534, 535) et le canal d'écrou (222, 223) communiquent entre eux et du lubrifiant (56) coule du canal d'unité de lubrification (521, 531, 532, 534, 535) dans le canal d'écrou (222, 223) puis vers le point de lubrification (224) ; **caractérisée en ce que** ladite unité de lubrification (50) comprend un manchon (51), un élément de conduite (53) et un élément de ressort (54) ; **en ce que** ledit manchon (51) comprend un espace intérieur (511) et **en ce qu'**une première extrémité de l'élément de conduite (53) ainsi que l'élément de ressort (54) sont disposés dans ledit espace intérieur (511) ; **en ce que** la première extrémité de l'élément de conduite (53) comprend au moins une surface d'étanchéité (533) ;
et **en ce que**, tant que ledit écrou (22) n'est pas déplacé dans la position de lubrification (SP), ledit élément de ressort (54) est conçu pour précharger mécaniquement la surface d'étanchéité (533) contre le manchon (51) dans l'espace intérieur (511) avec une force du ressort (FK) et pour interrompre une communication dans le canal d'unité de lubrification (521, 531, 532, 534, 535) de manière étanche au lubrifiant.

2. Unité de lubrification (50) selon la revendication 1, **caractérisée en ce que** ledit écrou (22) une fois déplacé dans la position de lubrification (SP) exerce une contre-force (GK) sur une seconde extrémité de l'élément de conduite (53), laquelle contre-force (GK) agit contre la force du ressort (FK) ; et **en ce qu'**une contre-force (GK) qui est supérieure à la force du ressort (FK) supprime l'interruption de la communication à l'intérieur du canal d'unité de lubrification (521, 531, 532, 534, 535).

3. Unité de lubrification (50) selon la revendication 2, **caractérisée en ce que** ledit écrou (22) déplacé dans la position de lubrification (SP) déplace l'élément de conduite (53) le long d'un axe longitudinal (X) et relâche la précharge mécanique de la surface d'étanchéité (533) contre le manchon (51).

4. Unité de lubrification (50) selon l'une quelconque des revendications 1 à 3, **caractérisée en ce que** ladite unité de lubrification (50) comprend une butée (536) ; **en ce que** le canal d'unité de lubrification (521, 531, 532, 534, 535) s'étend à travers ladite butée (536) ; **en ce que** la butée (536) comprend une surface d'étanchéité de butée (537) orientée vers ledit écrou (22) ; **en ce que** ledit écrou (22) comprend une surface d'étanchéité d'écrou (221) orientée vers l'unité de lubrification (50) ; et **en ce que**, lors d'un contact mécanique direct entre l'écrou (22) et l'unité de lubrification (50), la surface d'étanchéité de butée (537) et la surface d'étanchéité de l'écrou (221) sont conçues pour sceller la communication du canal d'unité de lubrification (521, 531, 532, 534, 535) avec le canal de l'écrou (222, 223) de manière étanche au lubrifiant.

5. Unité de lubrification (50) selon l'une quelconque des revendications 1 à 4, **caractérisée en ce que** ledit boîtier (40) comprend une première extrémité de boîtier (41) comportant un canal de boîtier (43), canal de boîtier (43) dans lequel du lubrifiant (56) est déposé ; **en ce que** ladite unité de lubrification (50) comprend un manchon (51) et un adaptateur (52) ; **en ce que** le manchon (51) comprend une première extrémité de manchon (512) orientée vers la première extrémité de boîtier (41) ; **en ce que** ledit adaptateur (52) est fixé à ladite première extrémité de manchon (512) ; et **en ce que** ladite unité de lubrification (50) peut être raccordée à la première extrémité de boîtier (41) par l'intermédiaire de l'adaptateur (52).

6. Unité de lubrification (50) selon la revendication 5, **caractérisée en ce que** ledit adaptateur (52) comprend un canal d'unité de lubrification (521) ; et **en ce que**, dans l'état raccordé à la première extrémité de boîtier (41), ledit canal de boîtier (43) communique avec le canal de l'adaptateur (521) et du lubrifiant (56) coule du canal de boîtier (43) dans le canal d'unité de lubrification (521) de l'adaptateur (52).

7. Unité de lubrification (50) selon la revendication 6, **caractérisée en ce que** ladite unité de lubrification (50) comprend un élément de conduite (53) ; **en ce que** ledit élément de conduite (53) comprend une première extrémité orientée vers l'adaptateur (52) ; **en ce que** ledit manchon (51) comprend un espace intérieur (511) et **en ce que** l'élément de conduite (53) est disposé dans ledit espace intérieur (511) avec sa première extrémité ; **en ce que** ledit élément de conduite (53) comprend au moins un canal d'unité de lubrification (531, 532) dans la zone de sa première extrémité ; et **en ce que** le canal d'unité de lubrification (531, 532) de l'élément de conduite (53) communique avec le canal d'unité de lubrification (521) de l'adaptateur (52) et du lubrifiant (56) coule du canal d'unité de lubrification (521) de l'adaptateur (52) dans le canal d'unité de lubrification (531, 532) de l'élément de conduite (53).

8. Unité de lubrification (50) selon la revendication 7, **caractérisée en ce que** ledit élément de conduite (53) comprend une seconde extrémité orientée vers l'écrou (22) ; **en ce que** ledit élément de conduite (53) est disposé à l'extérieur de l'espace intérieur (511) avec sa seconde extrémité ; **en ce que** ledit élément de conduite (53) comprend au moins un canal d'unité de lubrification (534, 535) dans la zone de sa seconde extrémité ; et **en ce que**, lorsque le canal d'unité de lubrification (531, 532) dans la zone de la première extrémité de l'élément de conduite (53) communique avec le canal d'unité de lubrification (534, 535) dans la zone de la seconde extrémité de l'élément de conduite (53), du lubrifiant (56) coule du canal d'unité de lubrification (531, 532) dans la zone de la première extrémité de l'élément de conduite (53) dans le canal d'unité de lubrification (534, 535) dans la zone de la seconde extrémité de l'élément de conduite (53).

9. Unité de lubrification (50) selon la revendication 8, **caractérisée en ce que** le canal d'unité de lubrification (531, 532) s'étend dans l'espace intérieur (511) dans la zone de la première extrémité de l'élément de conduite (53) ; **en ce que** ledit canal d'unité de lubrification (534, 535) s'étend dans l'espace intérieur (511) dans la zone de la seconde extrémité de l'élément de conduite (53) ; et **en ce que** la communication du canal d'unité de lubrification (531, 532) dans la zone de la première extrémité de l'élément de conduite (53) avec le canal d'unité de lubrification (534, 535) dans la zone de la seconde extrémité de l'élément de conduite (53) peut être interrompue dans l'espace intérieur (511).

10. Unité de lubrification (50) selon l'une quelconque des revendications 5 à 9, **caractérisée en ce que** ledit manchon (51) comprend un espace intérieur (511) et une seconde extrémité de manchon (513) orientée vers l'écrou (22) ; **en ce que** la seconde extrémité de manchon (513) comprend une ouverture ; **en ce que** l'unité de lubrification (50) comprend un élément de conduite (53) ; **en ce que** ledit élément de conduite (53) comprend une première extrémité et est disposé dans l'espace intérieur (511) avec sa première extrémité ; **en ce que** ledit élément de conduite (53) s'étend à travers l'ouverture de la seconde extrémité de manchon (513) hors de l'espace intérieur (511) ; **en ce que**, dans la zone de l'ouverture de la seconde extrémité de manchon (513), une face radialement extérieure dudit élément de conduite (53) est espacée d'une face radialement intérieure de la seconde extrémité de manchon (513) par un écart ; et **en ce que** ladite unité de lubrification (50) comprend un élément d'étanchéité (55), ledit élément d'étanchéité (55) étant disposé au niveau de la seconde extrémité de manchon (513) et scelle ledit écart de manière étanche au lubrifiant.

11. Procédé de lubrification d'un module d'assemblage (1), lequel module d'assemblage (1) comprend un entraînement à vis (20), un poussoir (30) et un boîtier (40), lequel entraînement à vis (20) comprend un écrou (22), lequel poussoir (30) peut être déplacé par ledit écrou (22) selon un mouvement linéaire ; comprenant une unité de lubrification (50), laquelle unité de lubrification (50) est disposée au niveau du boîtier (40) et contient du lubrifiant (56) dans au moins un canal d'unité de lubrification (521, 531, 532, 534, 535) ; lequel écrou (22) comprend au moins un canal d'écrou (222, 223) et au moins un point de lubrification (224) ; ledit écrou (22) étant déplacé dans une position de lubrification (SP), position de lubrification (SP) dans laquelle ledit écrou (22) et ladite unité de lubrification (50) sont en contact mécanique direct l'un avec l'autre et le canal d'unité de lubrification (521, 531, 532, 534, 535) et le canal de l'écrou (222, 223) communiquent entre eux et du lubrifiant (56) coule du canal d'unité de lubrification (521, 531, 532, 534, 535) dans le canal de l'écrou (222, 223), puis vers le point de lubrification (224) ; **caractérisée en ce que** ladite unité de lubrification (50) comprend un manchon (31), un élément de conduite (53) et un élément de ressort (54), lequel manchon (51) comprend un espace intérieur (511) et une première extrémité de l'élément de conduite (53) ainsi que l'élément de ressort (54) sont disposés dans ledit espace intérieur (511), ladite première extrémité de l'élément de conduite (53) comprenant au moins une surface d'étanchéité (533), et **en ce que**, tant que ledit écrou (22) n'est pas déplacé dans la position de lubrification (SP), ledit élément de ressort (54) est conçu pour précharger mécaniquement la surface d'étanchéité (533) contre le manchon (FK) dans l'espace intérieur (51) au moyen d'une force du ressort (511) et pour interrompre une communication dans le canal d'unité de lubrification (521, 531, 532, 534, 535) de manière étanche au lubrifiant.

12. Procédé selon la revendication 11, **caractérisée en ce que** ledit écrou (22) une fois déplacé dans la position de lubrification (SP) exerce une contre-force (GK) sur une seconde extrémité de l'élément de conduite (53), laquelle contre-force (GK) agit contre la force du ressort (FK) ; et **en ce qu'**une contre-force (GK) qui est supérieure à la force du ressort (FK) supprime l'interruption de la communication à l'intérieur du canal d'unité de lubrification (521, 531, 532, 534, 535).
